# EUROPEAN PATENT APPLICATION

(11) **EP 1 457 984 A2**
(43) Date of publication of application: **15.09.2004**
(21) Application number: 04004078.4
(22) Date of filing: 23.02.2004
(51) Int. Cl.: G11B 20/10, G11B 27/10

(54) **Information storage medium, information playback apparatus, and information playback method**

(30) Priority: 10.03.2003 JP 2003063933; 08.12.2003 JP 2003409372
(71) Applicant: Kabushiki Kaisha Toshiba, Tokyo (JP)
(72) Inventor: Tsumagari, Yasufumi c/o Toshiba Corporation, Minato-ku Tokyo 105-8001 (JP); Mimura, Hideki c/o Toshiba Corporation, Minato-ku Tokyo 105-8001 (JP)
(74) Representative: Henkel, Feiler & Hänzel

(57) **Abstract**

An apparatus includes a playback engine (100) which acquires video/audio contents from a disc (D2), an ENAV engine (200) + Internet connection unit (211) which acquire ENAV contents from the disc (D2) or acquire another ENAV contents from a server (500) via a communication line, and a buffer manager (204).
This buffer manager (204) generates timing information (preload/load end trigger) upon completion of acquisition of the ENAV contents.

## Description

The present invention relates to a medium for storing contents such as audio·video information and the like, and an information playback apparatus and information playback method for playing back contents stored in this medium.

In recent years, the standard of a read-only DVD (Digital Versatile Disc) has been specified, and players which play back video-audio information stored in read-only DVDs are beginning to be put on the market accordingly.

According to the read-only DVD standard, a read-only DVD stores presentation data which records actual video·audio data, and navigation data used to manage these data. The presentation data contains video data, audio data, and sub-picture data, which are multiplexed according to a program stream (2048 bytes) specification specified by MPEG2. The navigation data describes PGCs (ProGram Chains) and Cells, which set the time configuration and order of video·audio data to be played back, and can implement functions such as multiangle, multistory, parental, and the like.

As prior art associated with such standard, an image display apparatus which provides a service that combines a DVD-Video title and HTML file is available (Jpn. Pat. Appln. KOKAI Publication No. 11-161663). In this image display apparatus, an URL (Uniform Resource Locator) is extracted from a navi pack in a video object unit, and connection is established to the Internet based on that URL, thus displaying HTML data in synchronism with a scene which is currently being played back.

According to the aforementioned read-only DVD standard, an MPEG2 program stream recorded on a disk or disc can be played back, and information other than the MPEG2 program stream recorded on the disc cannot be played back. That is, DVD playback expandability is poor.

Jpn. Pat. Appln. KOKAI Publication No. 11-161663 above has a problem with a method of acquiring information by establishing connection to the Internet. In general, upon comparison between the read rate of information from a DVD and the download rate of information via the Internet, the former rate is faster. That is, in order to download information via the Internet, a considerable time is required, thus generating a wait time for the user.

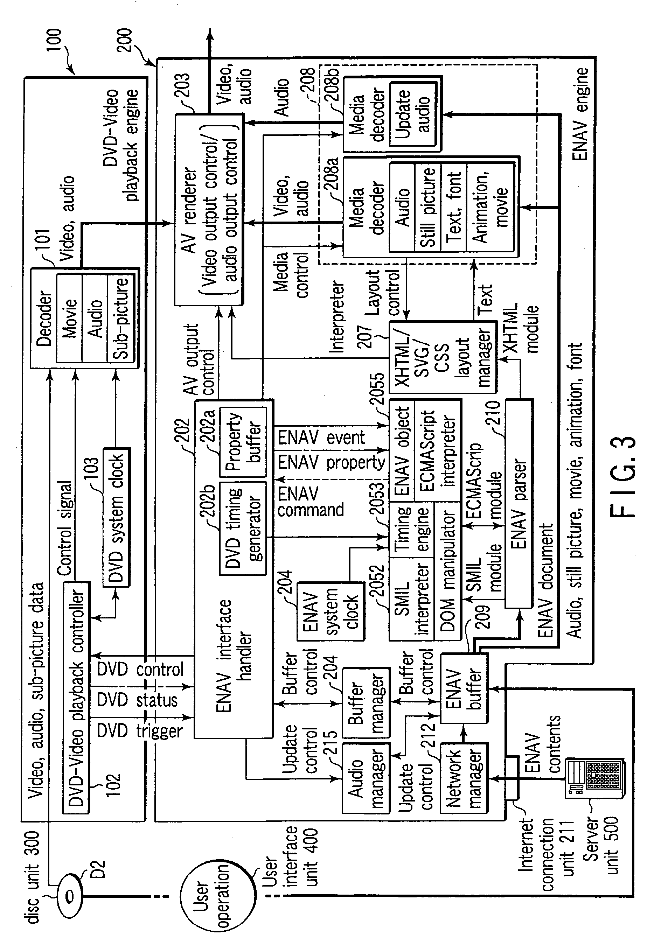

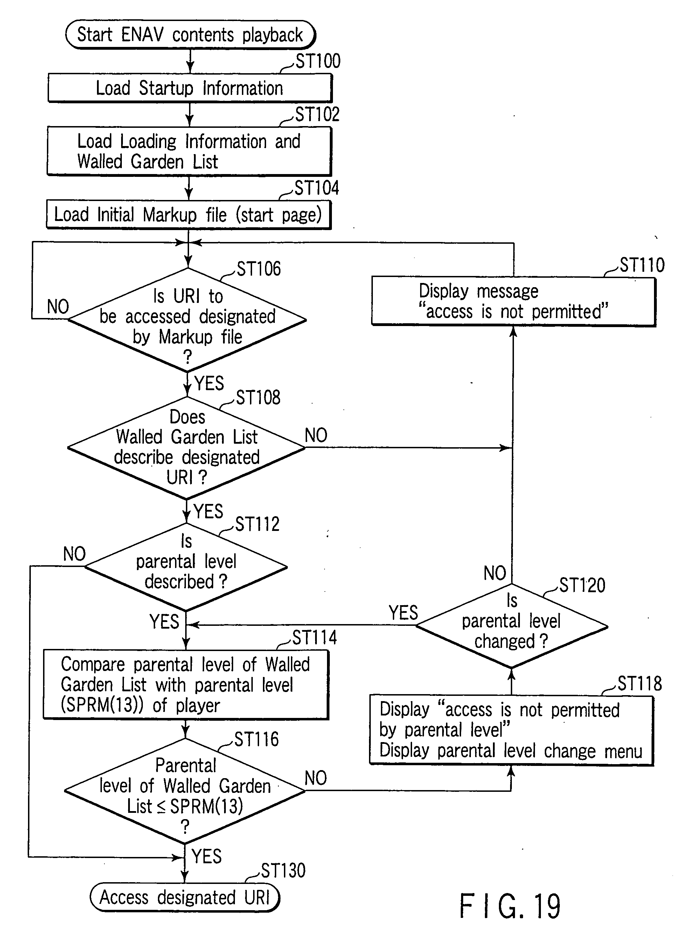

The present invention has been made in consideration of the above situation, and has as its object to provide an information playback apparatus and information playback method, which can assure high playback expandability, and can efficiently download information, and to provide an information storage medium suited to this apparatus or method.
[1] An information storage medium according to an embodiment of the present invention has a first area that stores video contents and/or audio contents (DVD-Video contents), and a second area that stores expansion information (ENAV contents). In this information storage medium, the expansion information (ENAV contents) can contain startup information, which is configured to directly or indirectly describe loading information. This loading information is configured to include preload information, which is used to preload information from the second area and/or an area other than this second area.
   (Note 1: "Directly" indicates a case wherein the startup information directly describes loading information. "Indirectly" indicates a case wherein startup information contains arbitrary description A, which describes loading information. Furthermore, "indirectly" also includes a case wherein when startup information contains arbitrary description A, description A contains description B,..., description X contains description Y, description Y contains description Z, and that description Z describes loading information.)
[2] An information playback apparatus according to an embodiment of the present invention is configured to play back an information storage medium which has a first area that stores video contents and/or audio contents (DVD-Video contents), and a second area that stores expansion information (ENAV contents). This information playback apparatus can comprise first acquisition means for acquiring the video contents and/or audio contents from the information storage medium, second acquisition means for acquiring the expansion information from the information storage medium or acquiring another expansion information from an external apparatus via a communication line, and means for generating timing information (preload/postload end trigger) indicating completion of acquisition of the expansion information.
[3] Alternatively, an information playback apparatus according to an embodiment of the present invention can comprise first acquisition means for acquiring contents (DVD-Video contents) from an information storage medium, second acquisition means for acquiring expansion information (ENAV contents) from the information storage medium or from an external apparatus via a communication line, means for instructing to acquire another expansion information (ENAV contents other than loading information) in accordance with time information described in the expansion information (ENAV document, loading information), and playback means for playing back the contents acquired by the first acquisition means, and playing back the expansion information in synchronism with playback of the contents.
[4] An information playback method according to an embodiment of the present invention acquires expansion information (ENAV contents) from an information storage medium or from an external apparatus via a communication line, acquires another expansion information (ENAV contents other than loading information) in accordance with the expansion information (ENAV document, loading information), plays back contents (DVD-Video contents) acquired from the information storage medium, and plays back the expansion information in synchronism with playback of the contents.
[5] In an information storage medium according to another embodiment of the present invention, expansion information can contain access limitation information (walled garden list 40c) that limits a user accessible range.
[6] An information playback apparatus according to another embodiment of the present invention can comprise means (firmware of an MPU (not shown) which forms an ENAV engine shown in FIG. 3) for executing external access (ST130 in FIG. 19) via a communication line within only a range (ST108 in FIG. 19, YES) in which access limitation information (walled garden list 40c) contained in the acquired expansion information permits access.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows an example of the data structure of a DVD-Video disc;
FIG. 2 shows an example of the data structure of an enhanced DVD-Video disc according to an embodiment of the present invention;
FIG. 3 is a block diagram showing an example of a DVD playback apparatus (information playback apparatus) according to the embodiment of the present invention;
FIG. 4 is a block diagram for explaining an example of the internal arrangement of ENAV buffer 209 in the apparatus shown in FIG. 3;
FIG. 5 shows an example of loading information described in an ENAV document (or a file designated by this document);
FIG. 6 shows another example of loading information described in an ENAV document (or a file designated by this document);
FIG. 7 is a block diagram for explaining an example of the arrangement of buffer manager 204 and its peripheral arrangement in the apparatus shown in FIG. 3;
FIG. 8 is a flow chart for explaining an example of the operation (the flow of events) of ENAV engine 200 in FIG. 4;
FIG. 9 is a timing chart for explaining an example of the operation executed when the apparatus in FIG. 3 loads data from disc unit 300;
FIG. 10 is a timing chart for explaining an example of the operation executed when the apparatus in FIG. 3 loads data from server unit 500;
FIG. 11 is a timing chart for explaining an example of the operation executed when the apparatus in FIG. 3 loads data from disc unit 300 and server unit 500;
FIG. 12 shows still another example of loading information described in an ENAV document (or a file designated by this document);
FIG. 13 is a timing chart for explaining another example of the operation executed when the apparatus in FIG. 3 loads data from disc unit 300 and server unit 500;
FIG. 14 is a view for explaining an example of how update audio data is updated;
FIG. 15 shows an example of a startup file;
FIG. 16 shows still another example of loading information;
FIG. 17 is a block diagram showing another example of the internal arrangement of ENAV buffer 209 in the apparatus shown in FIG. 3;
FIG. 18 shows an example of a walled garden list; and
FIG. 19 is a flow chart for explaining an example of the playback operation of ENAV contents on the basis of the walled garden list.

A preferred embodiment of the present invention will be described hereinafter with reference to the accompanying drawings. The data structure of a disc which considers compatibility to the DVD-Video standard will be explained first.

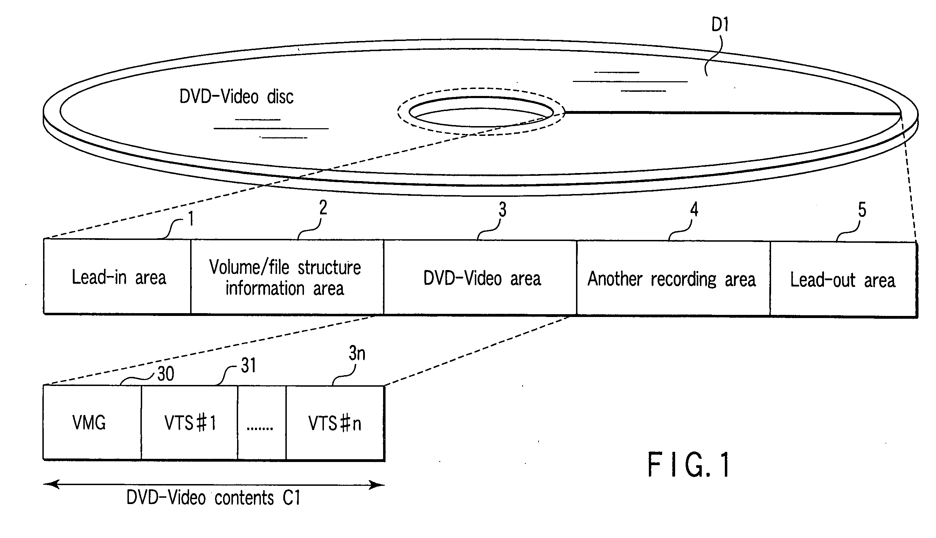

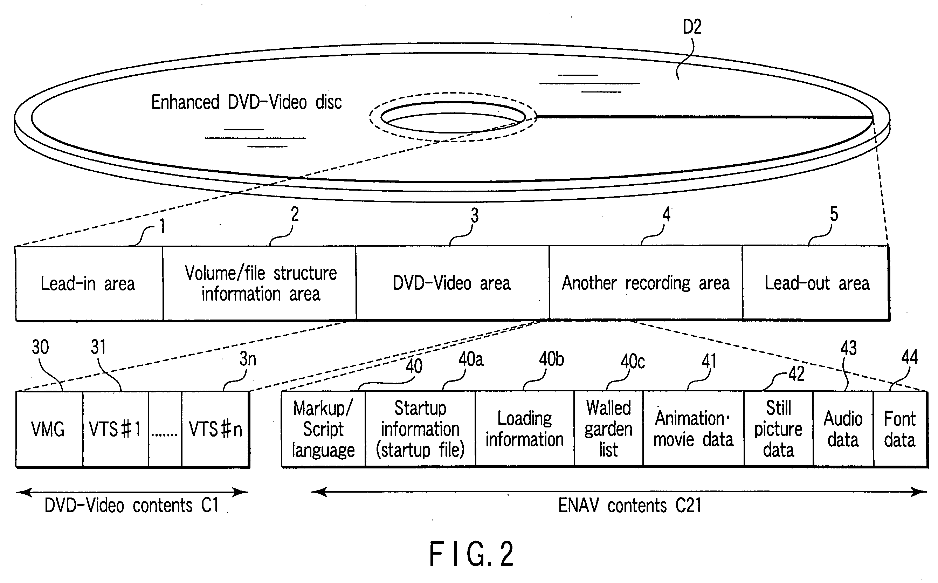

FIGS. 1 and 2 show examples of the data structures of DVD-Video discs which can be played back by a DVD-Video player shown in FIG. 3 (to be described later).

FIG. 1 shows an example of the data structure of standard DVD-Video disc D1. DVD-Video area 3 of standard DVD-Video disc D1 stores DVD-Video contents C1 (having an MPEG2 program stream structure).

On the other hand, FIG. 2 shows the data structure of enhanced DVD-Video disc D2. DVD-Video area 3 of enhanced DVD-Video disc D2 stores DVD-Video contents C1 (having an MPEG2 program stream structure) having the same data structure as the DVD-Video standard. Furthermore, another recording area 4 of enhanced DVD-Video disc D2 stores enhanced navigation (to be abbreviated as ENAV hereinafter) contents C21 which allows a wide variety of playback of video contents (in other words, which can improve playback expandability). Note that the presence of recording area 4 is also accepted in the DVD-Video standard.

The basic data structure of a DVD-Video disc will be explained below. The recording area of the DVD-Video disc includes lead-in area 1, volume space, and lead-out area 5 in turn from its inner periphery. The volume space contains volume/file structure information area 2, and DVD-Video area (DVD-Video zone) 3, and can also have another recording area (DVD other zone) 4 as an option.

Volume/file structure information area 2 is assigned for a UDF (Universal Disc Format) bridge. The volume of the UDF bridge format is recognized according to ISO/IEC13346 Part 2. A space that recognizes this volume consists of successive sectors, and starts from the first logical sector of the volume space (between lead-in area and lead-out area) in FIGS. 1 and 2. First 16 logical sectors are reserved for system use specified by ISO966. In order to assure compatibility to the conventional DVD-Video standard, volume/file structure information area 2 with such contents is required.

DVD-Video area 3 records management information called video manager VMG 30 and one or more video contents called video title sets VTS (VTS#1 to VTS#n). VMG 30 is management information for all VTSs present in DVD-Video area 3, and contains control data VMGI, VMG menu data VMGM_VOBS (option), and VMG backup data. Each VTS contains control data VTSI of that VTS, VTS menu data VTSM_VOBS (option), data VTSTT_VOBS of the contents (movie or the like) of that VTS (title), and VTSI backup data. To assure compatibility to the conventional DVD-Video standard, the DVD-Video area with such contents is also required.

A playback select menu or the like of each title (VTS#1 to VTS#n) is given in advance by a provider (the producer of a DVD-Video disc) using the VMG, and a playback chapter select menu, the playback order of recorded contents (cells), and the like in a specific title (e.g., VTS#1) are given in advance by the provider using the VTSI. Therefore, the viewer of the disc (the user of the DVD-Video player) can enjoy the recorded contents of that disc in accordance with the menus of the VMG/VTSI prepared in advance by the provider and playback control information (program chain information PGCI) in the VTSI. However, with the DVD-Video standard, the viewer (user) cannot play back the contents (movie or music) of each VTS by a method different from the VMG/VTSI prepared by the provider.

Enhanced DVD-Video disc D2 shown in FIG. 2 is prepared for a mechanism that allows the user to play back the contents (movie or music) of each VTS by a method different from the VMG/VTSI prepared by the provider, and to play back while adding contents different from the VMG/VTSI prepared by the provider.

ENAV contents C21 contained in this disc D2 cannot be accessed by a DVD-Video player which is manufactured on the basis of the conventional DVD-Video standard (even if the ENAV contents can be accessed, their contents cannot be used). However, a DVD-Video player (ENAV player in FIG. 3 or the like) can access ENAV contents C21, and can use their playback contents.

ENAV contents (ENAV contents C21 acquired from disc D2 and/or ENAV contents C22 externally acquired via the Internet or the like) are configured to contain an ENAV document described in Markup/Script language 40, startup information (startup file; STARTUP.MLS) 40a, loading information 40b, walled garden list 40c which is URI(Uniform Resource Identifier) list to be accessed by this ENAV player, animation/movie data 41, still picture data 42, audio data 43, font data 44, and the like. The ENAV document described in Markup/Script language 40 is used to control playback of audio data, still picture data, font/text data, movie data, animation data, and the like.

In the example illustrated in FIG. 2, Markup/Script language 40, startup information 40a, loading information 40b, walled garden list 40c, animation/movie data 41, still picture data 42, audio data 43, and font data 44 are recorded in the order named, but their recording locations are not limited to this order.

The ENAV document (playback control information) describes, using a Markup language or Script language, the playback methods of ENAV contents (consisting of audio, still picture, font/text, movie, animation, and the like) and/or DVD-Video contents C1.

For example, Markup languages such as HTML (Hyper Text Markup Language)/XHTML (extensible Hyper Text Markup Language), SMIL (Synchronized Multimedia Integration Language), and the like, Script languages such as an ECMA (European Computer Manufacturers Association) script, JavaScript, and the like, and so forth, may be adopted, and the ENAV document can be generated using these languages in combination.

Since the contents of enhanced DVD-Video disc D2 in FIG. 2 except for another recording area 4 comply with the DVD-Video standard, video contents recorded on DVD-Video area 3 can be played back using an already prevalent DVD-Video player (i.e., this disc is compatible to conventional DVD-Video disc D1).

ENAV contents C21 recorded on another recording area 4 cannot be played back (or used) by the conventional DVD-Video player but can be played back and used by a DVD-Video player (FIG. 3) according to an embodiment of the present invention. Therefore, when ENAV contents C21 (and also externally acquired ENAV contents C22) are played back using the DVD-Video player according to an embodiment of the present invention, the user can enjoy not only the contents of the VMG/VTSI prepared in advance by the provider but also a variety of video playback features (i.e., high playback expandability can be assured).

Note that a file system which manages ENAV contents C21 in FIG. 2 can adopt the following hierarchical structure. That is, a video title set directory (VIDEO_TS), ENAV directory (DVD_ENAV), other directories, other files, and the like are allocated under a root directory. Startup information (STARTUP.MLS) 40a, loading information 40b, walled garden list 40c and (one or more) files for ENAV contents (41 to 44) in FIG. 2 are allocated in the ENAV directory (DVD_ENAV). In this case, one or more other directories for ENAV can be formed under the ENAV directory (DVD_ENAV). One or more other directories for ENAV can also be formed under another directory for ENAV. In this manner, the ENAV directory that contains one or more files for ENAV contents can have a hierarchical structure.

The following extensions can be assigned to file names used in the above file system.
MLS...startup file (startup file 40a);
HTM, htm, HTML, html, XHTM, xhtm, XHTML, xhtml...document in the XHTML language;
LST, 1st...walled garden list file (walled garden list 40c);
FON, fon...font;
CSS, css...cascading style font
JS, js...ECMA script
LDI, ldi...loading information (loading information 40b);
JPG, jpg, JP, jp, JPE, jpe...jpeg image;
GIF, gif...GIF image
PNG, png...PNG image;
MNG, mng, JNG, jng...MNG animation;
SWF, swf...flash animation
SMI, smi, SMIL, smile ..document in SMIL language;
AC3, ac3...Dolby digital audio (AC3 is the registered tradename ®);
DTS, dts...DTS audio (DTS is the registered tradename ®);
MP2, mp2...MPEG audio; and
SDDS, sdds...SDDS audio (SDDS is the registered tradename ®).

FIG. 3 shows an example of a DVD-Video player (information playback apparatus) used to play back an ENAV disc (FIG. 2) according to the embodiment of the present invention. This DVD-Video player plays back and processes recorded contents (DVD-Video contents C1 and/or ENAV contents C21) from ENAV disc D2 (FIG. 2) which is compatible to the existing DVD-Video standard, and downloads and processes ENAV contents C22 via a communication line such as the Internet or the like. Note that ENAV contents C21 and C22 are one type of expansion information.

The DVD-Video player shown in FIG. 3 comprises DVD-Video playback engine 100, ENAV engine 200, disc unit 300, and user interface unit 400. DVD-Video playback engine 100 plays back and processes an MPEG2 program stream (DVD-Video contents C1) recorded on ENAV disc D2. ENAV engine 200 plays back and processes ENAV contents C21 and C22. Disc unit 300 reads out DVD-Video contents C1 and/or ENAV contents C21 recorded on ENAV disc D2. User interface unit 400 transmits inputs (user's operations/events) by the user of the player as user triggers.

ENAV engine 200 comprises Internet connection unit 211. Internet connection unit 211 serves as a communication means used to establish connection to a communication line such as the Internet or the like. Furthermore, ENAV engine 200 includes ENAV interface handler 202, AV renderer 203, buffer manager 204, interpreter unit 205, XHTML/SVG/CSS layout manager 207, media decoder 208, ENAV buffer unit 209, ENAV parser 210, network manager 212, ENAV system clock 214, and audio manager 215.

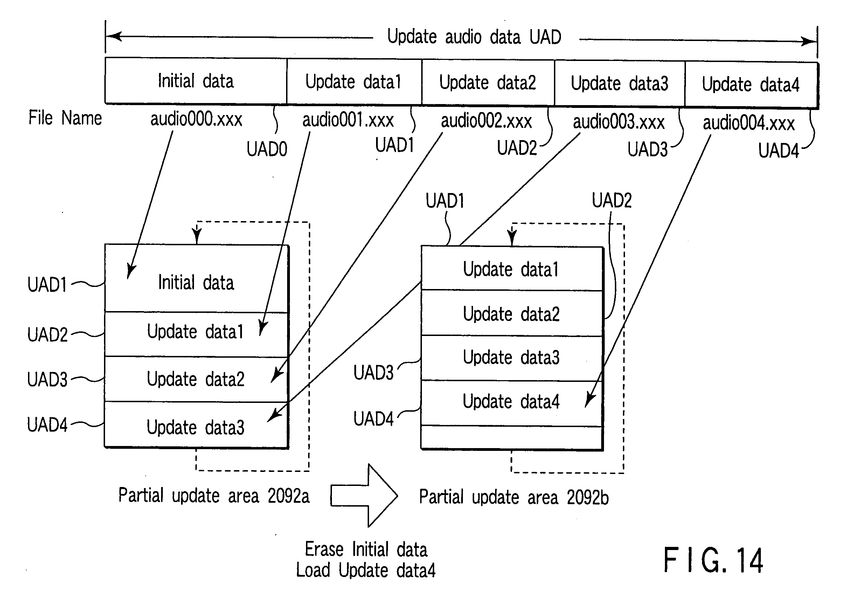

Interpreter unit 205 comprises DOM manipulator 2051, SMIL interpreter 2052, timing engine 2053, ECMAScript interpreter 2054, ENAV object 2055, and the like. Media decoder 208 includes media decoder 208a for audio/still picture/text·font/animation·movie, and the like, and media decoder 208b for update audio data (to be described later with reference to FIG. 14) which is updated as needed.

In the block arrangement shown in FIG. 3, DVD-Video playback controller 102, DVD-Video decoder 101, DVD system clock 103, ENAV interface handler 202, ENAV parser 210, interpreter unit 205, XHTML/SVG/CSS layout manager 207, AV renderer 203, media decoder 208, buffer manager 204, audio manager 215, network manager 212, ENAV system clock 214, and the like can be implemented by a microcomputer (and/or hardware logic) which serves as functions of the respective blocks by an installed program (firmware; not shown). A work area used upon executing this firmware can be assured on a semiconductor memory (and/or a hard disk as needed) in the respective blocks.

DVD-Video playback engine 100 is a device for playing back DVD-Video contents C1 based on the existing DVD-Video standard. DVD-Video playback engine 100 includes DVD-Video decoder 101 which decodes DVD-Video contents C1 loaded by disc unit 300, DVD-Video playback controller 102 which makes playback control of the DVD-Video contents C1, and DVD system clock 103 which determines the decode and output timings in DVD-Video decoder 101.

DVD-Video decoder 101 has a function of decoding video data, audio data, and sub-picture data based on the existing DVD-Video standard, and outputting the decoded video data (mixed data of the aforementioned video and sub-picture data) and audio data, respectively. With this function, DVD-Video playback engine 100 has the same function as that of a playback engine of a normal DVD-Video player, which is manufactured based on the existing DVD-Video standard. That is, the player shown in FIG. 3 can play back video data, audio data, and the like of an MPEG2 program stream structure as in a normal DVD-Video player, and can play back existing DVD-Video disc (complying with the ongoing DVD-Video standard) D1 (to assure playback compatibility to existing DVD software).

In addition, DVD-Video playback controller 102 can also control playback of DVD-Video contents C1 in accordance with a "DVD control" signal output from ENAV engine 200. More specifically, if an arbitrary event (e.g., menu call or title jump) has occurred in DVD-Video playback engine 100 in a DVD-Video playback mode, DVD-Video playback controller 102 can output a "DVD trigger" signal indicating the playback status of DVD-Video contents C1 to ENAV engine 200. In this case (simultaneously with output of the DVD trigger signal or at an appropriate timing before and after the output), DVD-Video playback controller 102 can output a "DVD status" signal indicating property information (e.g., an audio language, sub-picture subtitle language, playback operation, playback position, various kinds of time information, disc contents, and the like set in the player) of the DVD-Video player to ENAV engine 200.

ENAV interface handler 202 receives "user trigger" signals corresponding to user operations (menu call, title jump, play start, play stop, play pause, and so forth) from user interface unit 400. ENAV interface handler 202 transmits the received user trigger signals to interpreter unit 205 as corresponding ENAV events.

For example, the ENAV documents (40 in FIG. 2) can describe the following instructions for the ENAV events.
01: issue an ENAV command corresponding to a user operation. That is, the same command as the user operation is transmitted to the DVD-Video playback engine as a DVD control signal.
02: issue an ENAV command different from a user operation. That is, the user operation is substituted by another operation in accordance with an instruction of the ENAV document.
03: ignore user trigger. That is, a user event is inhibited since, for example, the user may designate a DVD-Video playback process which is not designed by the contents provider. This inhibition can be achieved using user operation control (UOP) specified in the existing DVD-Video standard.

Note that the contents of the user trigger signal transmitted to ENAV interface handler 202 may be transmitted to AV renderer 203 as an "AV output control" signal. As a result, for example, when the user has changed the contents or window size or has shifted its display position using a cursor key of a remote controller (not shown), a user trigger signal based on this operation is output to AV renderer 203 as a corresponding AV output control signal. In addition, when a user trigger signal which indicates switching between a video·audio output from DVD-Video playback engine 100 and that from ENAV engine 200 is sent to the AV renderer 203, the video·audio output can be switched in response to the user operation.

ENAV interface handler 202 exchanges a "DVD status" signal, "DVD trigger" signal, and/or "DVD control" signal with DVD-Video playback controller 102, or exchanges a "user trigger" signal with user interface unit 400. Furthermore, ENAV interface handler 202 exchanges an "ENAV event", "ENAV property", "ENAV command", and "ENAV control" signal with interpreter unit 205.

That is, EVA interface handler 202 can do the following.
11: ENAV interface handler 202 transmits a ["DVD trigger" signal which indicates the operation of DVD-Video playback engine 100] from DVD-Video playback engine 100, or a ["user trigger" which indicates the user operation] from user interface unit 400 to interpreter unit 205 as an "ENAV event". Also, ENAV interface handler 202 transmits a ["buffer trigger (preload end trigger, postload end trigger)" indicating status of ENAV buffer 209] (not shown) which is sent from ENAV buffer 209 via buffer manager 204 to interpreter unit 205 as an "ENAV event". Furthermore, ENAV interface handler 202 transmits an ["update audio trigger" indicating status of partial update area 2092] (not shown) which is sent from ENAV buffer 209 via audio manager 215 to interpreter unit 205 as an "ENAV event".
12: ENAV interface handler 202 transmits a ["DVD status" signal which indicates the playback status of DVD-Video playback engine 100] from DVD-Video playback engine 100 to interpreter unit 205 as an "ENAV property". At this time, DVD status information is saved in property buffer 202a of ENAV interface handler 202 as needed.
13: ENAV interface handler 202 outputs a ["DVD control" signal used to control playback of DVD-Video playback engine 100] to DVD-Video playback engine 100, an ["AV output control" signal used to switch video and audio data] to AV renderer 203, a ["buffer control" signal used to load/erase the contents of the buffer] to buffer manager 204, an ["update control" signal used to download update audio data] to audio manager 215, a ["media control" signal used to instruct decoding of ENAV media] to media decoder 208, in accordance with the contents of an "ENAV command" signal from Interpreter unit 205.
14: ENAV interface handler 202 measures information of DVD system clock 103 in DVD-Video playback engine 100 using its DVD timing generator 202b, and transmits that information to media decoder 208 as a "DVD timing" signal. That is, media decoder 208 can decode ENAV media in synchronism with the system clocks of DVD-Video playback engine 100.

As described above, ENAV interface handler 202 has a function of parsing and interpreting ENAV contents, and then converting control signals and the like between DVD-Video playback engine 100 and ENAV engine 200.

ENAV interface handler 202 is configured to exchange a first signal (including information of trigger, status, control, and the like) and to exchange a second signal (including information of event, property, command, and the like) on the basis of the contents which are parsed by ENAV parser 210 and are interpreted by interpreter unit 205, or a user trigger from an input device (e.g., a remote controller; not shown).

In other words, ENAV interface handler 202 controls the output states of video and audio signals by AV renderer 203 on the basis of at least one of the first signal exchanged with DVD-Video playback controller 102, and the second signal exchanged with interpreter unit 205.

Note that the first signal pertains to the playback status of ENAV disc D2, and corresponds to the "DVD control" signal, "DVD trigger" signal, "DVD status" signal, and the like. The second signal pertains to the contents of the ENAV contents, and corresponds to the "ENAV event" signal, "ENAV command" signal, "ENAV property" signal, "ENAV control" signal, and the like.

ENAV interface handler 202 is configured to execute processes corresponding to user triggers in accordance with the ENAV document (a document described in Markup/Script language 40 in FIG. 2). AV renderer 203 is configured to mix video·audio data generated by media decoder 208 with that played back by DVD-Video playback engine 100 on the basis of the execution results of the processes corresponding to user triggers, and to output mixed data.

Alternatively, AV renderer 203 is configured to select one of video·audio data generated by media decoder 208 and that played back by DVD-Video playback engine 100 on the basis of the execution result of the ENAV command in ENAV interface handler 202, and to output the selected video·audio data.

Generally speaking, ENAV parser 210 parses an [ENAV document indicating playback control information], which is contained in ENAV contents C21 acquired from ENAV disc D2, or an [ENAV document indicating playback control information], which is contained in ENAV contents C22 acquired from the Internet or the like. The ENAV document is made up of a combination of Markup languages such as HTML/XHTML, SMIL, and the like, and Script languages such as ECMAScript, JavaScript, and the like, as described above.

Furthermore, ENAV parser 210 has a function of transmitting an ECMAScript module to ECMAScript interpreter 2054, SMIL module to SMIL interpreter 2052, and XHTML module to XHTML/SVG/CSS layout manager 207 in accordance with the parsing result.

ECMAScript interpreter 2054 interprets the aforementioned ECMAScript module and follows its instruction. That is, ECMAScript interpreter 2054 has a function of issuing an "ENAV command" signal used to control respective functions in ENAV engine 200 to ENAV interface handler 202 in correspondence with an "ENAV event" signal sent from ENAV interface handler 202 or an "ENAV property" signal read from the property buffer of ENAV interface handler 202.

Note that ECMAScript interpreter 2054 can control DVD-Video playback engine 100 and can decode ENAV media (audio, still picture, text·font, movie·animation) by issuing an "ENAV command" signal to DVD-Video playback engine 100 and a "media control" signal to media decoder 208 at timings designated by the ENAV document in accordance with the time measured b ENAV system clock 214.

SMIL timing engine 2053 interprets the aforementioned SMIL module and follows its instruction. That is, SMIL timing engine 2053 has a function of issuing an "ENAV control" signal to ENAV interface handler 202 or media decoder 208 in correspondence with an "ENAV event" signal sent from ENAV interface handler 202 or an "ENAV property" signal read from the property buffer of ENAV interface handler 202 in accordance with the ENAV system clocks. With this function, control of the DVD-Video playback engine 100 and decoding of ENAV media (audio, still picture, text·font, movie·animation) can be achieved at a desired timing.

XHTML/SVG/CSS layout manager 207 interprets the aforementioned XHTML module and follows its instruction. That is, XHTML/SVG/CSS layout manager 207 outputs a "layout control" signal to AV renderer 203. The "layout control" signal contains information associated with the size and position of a video window to be output (this information often contains information associated with a display time such as display start, end, or continuation), and information associated with the level of audio data to be output (this information often contains information associated with an output time such as output start, end, or continuation). Also, text information to be displayed, which is contained in the XHTML module, is sent to media decoder 208, and is decoded and displayed using desired font data.

Practical methods of parsing and interpreting Markup and Script languages can adopt the same methods as parsing/interpretation in state-of-the-art techniques such as HTML/XHTML, SMIL, and the like or ECMAScript, JavaScript, and the like (the hardware used is the microcomputer that has been mentioned at the beginning of the description of FIG. 3). Note that commands and variables described in Scripts are different since objects to be controlled are different.

The ENAV document (e.g., a document described in Markup/Script language 40 in FIG. 2) used upon practicing the present invention uses unique commands and variables associated with playback of ENAV disc D2 and/or ENAV contents C21 or C22. For example, a command that switches the playback contents of ENAV disc D2 or ENAV contents C21 or C22 in response to a given event is unique to a Markup or Script language in the ENAV document.

As another example of commands and variables unique to a Markup or Script language in the ENAV document, those which are used to change the video size from DVD-Video playback engine 100 and/or ENAV engine 200 and to change the layout of that video data are available. A change in video size is designated using a size change command and a variable that designates the size after change. A change in video layout is designated by a display position change command and a variable that designates the coordinate position or the like after change. When objects to be displayed overlap on the screen, a variable that designates depth ordering is added.

As still another example of commands and variables unique to a Markup or Script language in the ENAV document, those which are used to change the audio level from DVD-Video playback engine 100 and/or ENAV engine 200 or to select an audio language to be used are available. A change in audio level is designated by an audio level change command and a variable that designates an audio level after change. An audio language to be used is selected by an audio language change command and a variable that designates the type of language after change. As yet another example of commands and variables unique to a Markup or Script language in the ENAV document, those which are used to control user triggers from user interface unit 400 are available.

On the basis of the commands/variables of the Markup and Script languages in the ENAV document, as exemplified above, a "layout control" signal is sent from XHTML/SVG/CSS layout manager 207 (some functions are often implemented by SMIL timing engine 2053) to AV renderer 203. The "layout control" signal controls the layout on the screen, size, output timing, and output time of video data to be displayed on, e.g., an external monitor device or the like (not shown), and/or the tone volume, output timing, and output time of audio data to be played back from an external loudspeaker (not shown).

Media decoder 208 can include a sub-unit (media decoder 208a) which decodes data of ENAV contents such as audio data, still picture data (including a background image), text·font data, movie·animation data, and the like contained in ENAV contents C21 or C22. This media decoder 208a includes an audio decoder, still picture decoder, text·font decoder, and animation·movie decoder in correspondence with objects to be decoded. For example, audio data in the ENAV contents, which is encoded by, e.g., MPEG, AC-3®, or DTS® is decoded by the audio decoder and is converted into non-compressed audio data. Still picture data or background image data, which is encoded by JPEG, GIF, or PNG, is decoded by the still picture decoder, and is converted into non-compressed image data. Likewise, movie·animation data, which is encoded by MPEG2, MPEG4, MacromediaFlash, SVG (Scalable Vector Graphics), is decoded by the movie·animation decoder, and is converted into non-compressed movie data. Text data contained in the ENAV contents is decoded by the text·font decoder using font data (e.g., OpenType format) contained in the ENAV contents, and is converted into text image data which can be superimposed on a movie or still picture.

Video-audio data, which contains these decoded audio data, image data, animation·movie data, and text image data as needed, is sent from media decoder 208 to AV renderer 203. These ENAV contents are decoded in accordance with an instruction of a "media control" signal from ENAV interface handler 202 and in synchronism with a "DVD timing" signal from ENAV interface handler 202 and an "ENAV timing" signal from ENAV system clock 214.

AV renderer 203 has a function of controlling a video·audio output. More specifically, AV renderer 203 controls, e.g., the video display position and size (often including the display timing and display time together), and the audio level (often including the output timing and output time together) in accordance with the "layout control" signal output from XHTML/SVG/CSS layout manager 207. Also, AV renderer 203 executes pixel conversion of video data in accordance with the type of designated monitor and/or the type of video data to be displayed. The video·audio outputs to be controlled are those from DVD-Video playback engine 100 and media decoder 208.
Furthermore, AV renderer 203 has a function of controlling mixing and switching of DVD-Video contents C1 and ENAV contents C21 or C22 in accordance with an "AV output control" signal output from ENAV interface handler 202.

Note that ENAV engine 200 in the DVD-Video player in FIG. 3 comprises an interface for sending the ENAV document in ENAV contents C21 read from ENAV disc D2 to ENAV parser 210 via ENAV buffer unit 209, and an interface for sending data (audio data, still picture data, text·font data, movie data, and the like) in read ENAV contents C21 to media decoder 208 via ENAV buffer unit 209. These interfaces form an interface (first interface) independent from Internet connection unit 211 in FIG. 3.

Also, the DVD-Video player in FIG. 3 comprises an interface for receiving ENAV contents C22 from a communication line such as the Internet or the like, and sending the ENAV document in received ENAV contents C22 to ENAV parser 210 via ENAV buffer unit 209, and an interface for sending data (audio data, still picture data, text·font data, movie data, and the like) in received ENAV contents C22 to media decoder 208 via ENAV buffer unit 209. These interfaces form the Internet connection unit (second interface) shown in FIG. 3.

ENAV buffer unit 209 comprises a buffer that stores ENAV contents C22 downloaded from server unit 500, and also stores ENAV contents C21 read from ENAV disc D2 via disc unit 300. ENAV buffer unit 209 reads ENAV contents C22 in server unit 500, and downloads them via Internet connection unit 211 under the control of buffer manager 204 based on the ENAV document (Markup language/Script language).

Also, ENAV buffer unit 209 loads ENAV contents C21 recorded on ENAV disc D2 under the control of buffer manager 204 based on the ENAV document (Markup language/Script language). At this time, if disc unit 300 is a device that can access the disc at high speed, disc unit 300 can read out ENAV contents C21 from ENAV disc D2 while playing back DVD-Video contents C1, i.e., reading out DVD-Video data from ENAV disc D2. If disc unit 300 is not a device that can make high-speed access, or if the playback operation of DVD-Video contents C1 is to be perfectly guaranteed, playback of DVD-Video contents C1 must not be interrupted. In such case, ENAV contents C21 are read out from ENAV disc D2 and are stored in the ENAV buffer in advance prior to the beginning of playback.

In this way, since ENAV contents C21 are read out from the ENAV buffer simultaneously when DVD-Video contents C1 are read out from ENAV disc D2, the load on disc unit 300 can be reduced. Hence, DVD-Video contents C1 and ENAV contents can be simultaneously played back without interrupting playback of DVD-Video contents C1.

In this manner, since ENAV contents C22 downloaded from server unit 500 are stored in ENAV buffer unit 209 in the same manner as ENAV contents C21 recorded on ENAV disc D2, DVD-Video contents C1 and ENAV contents C22 can be simultaneously read out and played back.

ENAV buffer unit 209 has a limited storage capacity. That is, the data size of ENAV contents C21 or C22 that can be stored in ENAV buffer unit 209 is limited. For this reason, it is possible to erase ENAV contents C21 or C22 with low necessity and to save those with high necessity under the control of buffer manager 204 (buffer control). ENAV buffer unit 209 can automatically execute such save control and erase control.

Furthermore, ENAV buffer unit 209 has a function (preload end trigger, postload end trigger) of loading contents requested by buffer manager 204 from disc unit 300 or server unit 500 onto ENAV buffer unit 209, and informing buffer manager 204 that ENAV contents designated by buffer manager 204 have been loaded onto the buffer.

Buffer manager 204 can send the following instructions as "buffer control" to ENAV buffer unit 209 in accordance with an instruction of the ENAV document.
- load all or part of a specific file from a server;
- load all or part of a specific file from a disc; and
- erase all or part of a specific file from a buffer.

Furthermore, buffer manager 204 instructs ENAV buffer unit 209 to load ENAV contents in accordance with loading information, which is described in the ENAV document or in a file designated by the ENAV document. Buffer manager 204 has a function (buffer control) of requesting to inform that specific ENAV contents described in loading information have been loaded onto ENAV buffer unit 209.

Upon completion of loading of the specific ENAV contents onto ENAV buffer unit 209 (load completion), ENAV buffer unit 209 informs buffer manager 204 of it (loaded ENAV contents), and the buffer manager informs ENAV interface handler 202 of it (preload end trigger, postload end trigger).

Audio manager 215 has a function of issuing an instruction for loading update audio data (audio commentary data or the like; see FIG. 14) from ENAV disc D2 in disc unit 300 or server unit 500 onto ENAV buffer unit 209 in accordance with an instruction of the ENAV document (update control).

Network manager 212 controls the operation of Internet connection unit 211. That is, Network manager 212 switches connection/disconnection of Internet connection unit 211 when the ENAV document designates connection or disconnection to or from the network as an ENAV command.

The building components of ENAV engine 200 in FIG. 3 can also be summarized as follows. That is, ENAV engine 200 comprises:
- ENAV parser 210;
   ENAV parser 210 parses the contents of the ENAV document.
- Interpreter unit 205, XHTML/SVG/CSS layout manager 207;
   Interpreter unit 205 which comprises the ECMAScript interpreter, SMIL timing engine, and the like, and XHTML/SVG/CSS layout manager 207 respectively interpret the parsed modules.
- ENAV interface handler 202;
   ENAV interface handler 202 handles control signals from interpreter unit 205, and those from DVD-Video playback controller 102.
- Media decoder 208 (208a, 208b);
   Media decoder 208a generates video·audio data corresponding to audio data, still picture data, text·font data, movie data, and the like contained in ENAV contents C21 or C22 in synchronism with the system clocks of the DVD playback engine or those of the ENAV engine. Media decoder 208b holds and outputs update audio data which is to be updated as needed.
- AV renderer 203;
   AV renderer 203 outputs data obtained by mixing video·audio data generated by media decoder 208 to that played back by DVD-Video playback engine 100 on the basis of the execution result of the ENAV command in ENAV interface handler 202. Or AV handler 203 selectively outputs one of video·audio data generated by media decoder 208 and that played back by DVD-Video playback engine 100 on the basis of the execution result of the ENAV command in ENAV interface handler 202.
- ENAV buffer unit 209;
   ENAV buffer unit 209 temporarily stores ENAV contents C22 acquired from disc unit 300 or from server unit 500 via Internet connection unit 211.
- Buffer manager 204;
   Buffer manager 204 loads or erases ENAV contents data to or from ENAV buffer unit 209 in accordance with an instruction from ENAV interface handler 202 (an instruction of the ENAV document), or the description of loading information.
- Audio manager 215;
   Audio manager 215 manages update audio data in partial update area 2092.
- Network manager 212;
   Network manager 212 controls connection or disconnection to or from the network in accordance with an instruction of the ENAV document.

The ENAV·DVD player with the arrangement shown in FIG. 3 can be generally recognized as follows. That is, this ENAV·DVD player is an apparatus which provides an audio·video output as needed in accordance with a user event input (input from a remote controller or a control panel of the player), contents from a DVD disc (DVD-Video contents C1 and ENAV contents C21) and/or contents from a server (ENAV contents C22).

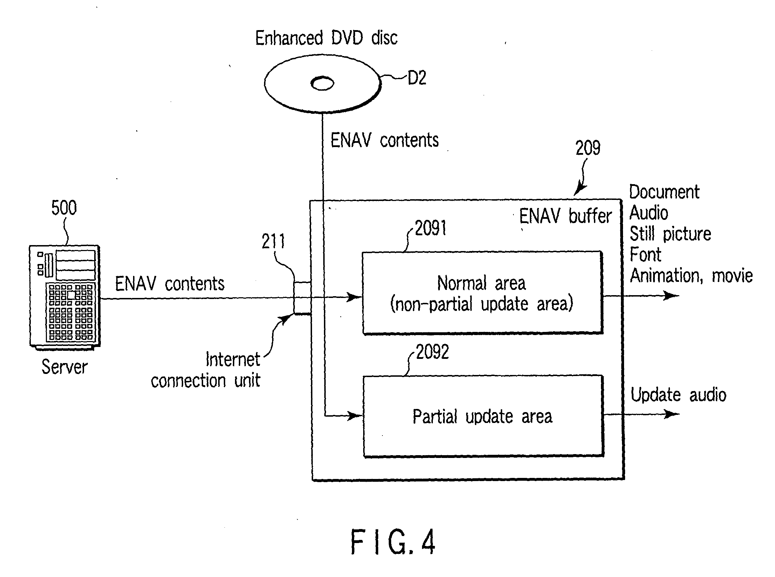

FIG. 4 shows an example of the internal arrangement of ENAV buffer 209. This ENAV buffer 209 comprises normal area (non-partial update area) 2091 and partial update area 2092. Normal area 2091 is an area for which neither loading nor erasure of ENAV contents are made during seamless playback of DVD-Video contents once the ENAV contents are loaded, i.e., an area for which playback of DVD-Video contents is interrupted when new ENAV contents are to be loaded, and the contents are loaded after the contents of the normal area are erased. On the other hand, partial update area 2092 is an area for which ENAV contents are loaded and erased as needed even during playback of DVD contents, and is used to store update audio data (audio commentary data) UAD shown in, e.g., FIG. 14.

Normal area 2091 is used to store documents (Markup/Script/loading information, etc), still picture data, animation·movie data, audio data, font data, and the like. Partial update area 2092 comprises, e.g., a ring buffer and is configured to be able to play back segmented update audio data while loading them.

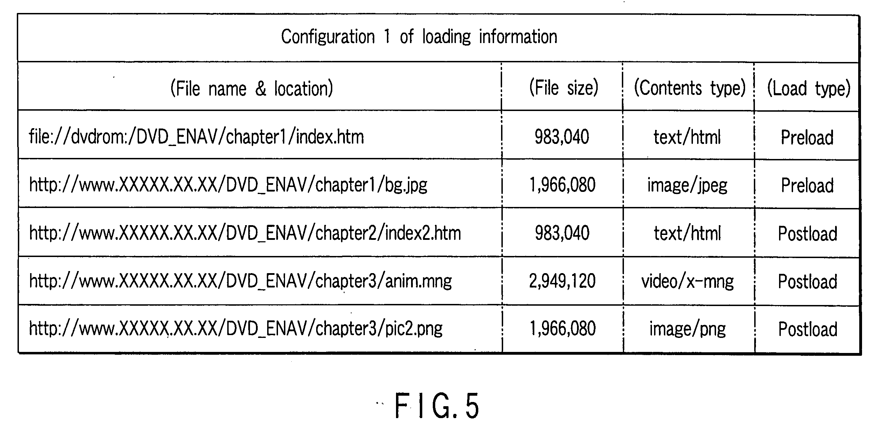

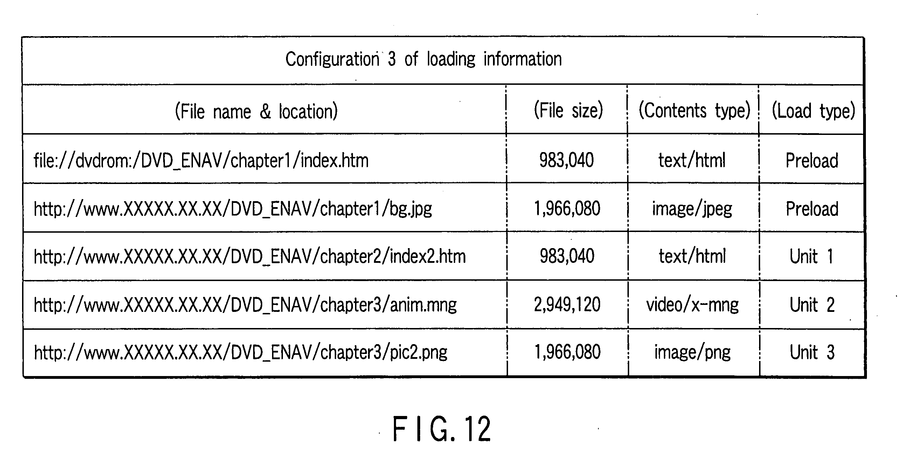

In the arrangement shown in FIG. 3, the total size of ENAV buffer 209 is, e.g., 30MB to 40MB. Such large-capacity ENAV buffer 209 can be formed by a semiconductor memory or using a part of a hard disk. Even when the total size of ENAV buffer 209 is fixed to a given value (e.g., 36MB), normal area (non-partial update area) 2091 and partial update area 2092 can have variable sizes. In this case, the size to be set of normal area 2091 is described in startup information (STARTUP.MLS) 40a or in loading information 40b in FIG. 2 as a numerical value. Otherwise, the size of normal area 2091 can be determined based on the total value of file sizes (see FIG. 5 or FIG. 12) described in loading information. That is, a size equal to or slightly larger than the total value of file sizes described in startup information (STARTUP.MLS) 40a can be assigned to normal area 2091, and the remaining size (all or part). of ENAV buffer 209 can be assigned to partial update area 2092.

FIG. 5 shows an example of loading information described in the ENAV document (or a file designated by this document). This loading information includes a file name & location field, file size field, contents type field, download type field, and the like.

The file name & location field describes the URL address and file name of a file when that file is present on server unit 500, or describes the directory on a disc and file name of a file when that file is present on the disc. The file size field describes the file size of a file (unit: bytes). The contents type field describes the type of contents using MIME types, and the load type field describes the load timing ("preload", "postload").

In the example of FIG. 5, two different load types, i.e., "preload" and "postload" are used. "Preload" means that data must be pre-loaded onto ENAV buffer 209 before the beginning of display of ENAV contents or before the beginning of playback of DVD-Video contents. Also, "Postload" means that data are loaded onto ENAV buffer 209 after the beginning of display of ENAV contents or after the beginning of playback of DVD-Video contents.

For example, ENAV contents required for a startup page of the ENAV contents are discriminated as "preload", and other ENAV contents are discriminated as "postload". ENAV contents (those with load type = "preload") required for a startup page are loaded onto ENAV buffer 209. After that, display of ENAV contents/playback of DVD-Video contents is started, and remaining ENAV contents (those with load type = "postload") can be loaded wile playing back the DVD-Video contents. In this way, the wait time of the user until start of display of ENAV contents/start of playback of DVD-Video contents can be minimized.

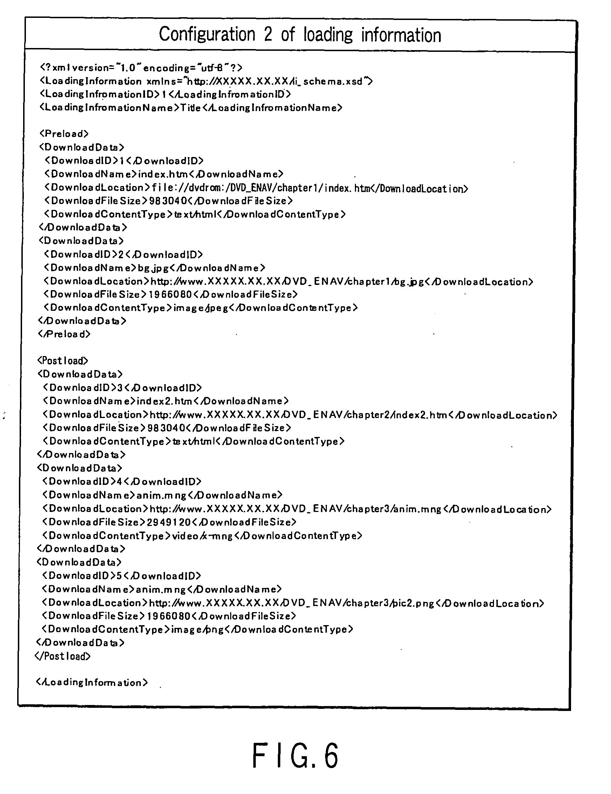

FIG. 6 shows a description example of the loading information in FIG. 5 using an XML format. In this example, one loading information consists of one loading information ID (Loading Information ID), one loading information name (Loading Information Name, a preload data group (Preload), and a postload data group (Postload). Each data group consists of zero or one or more download data (Download Data). One download data consists of one download name (Download Name) indicating a file name, one download location (Download Location) indicating the file name and location, one download file size (Download File Size) indicating a file size (unit: bytes), and one download content type (Download Content Type) indicating a MIME type.

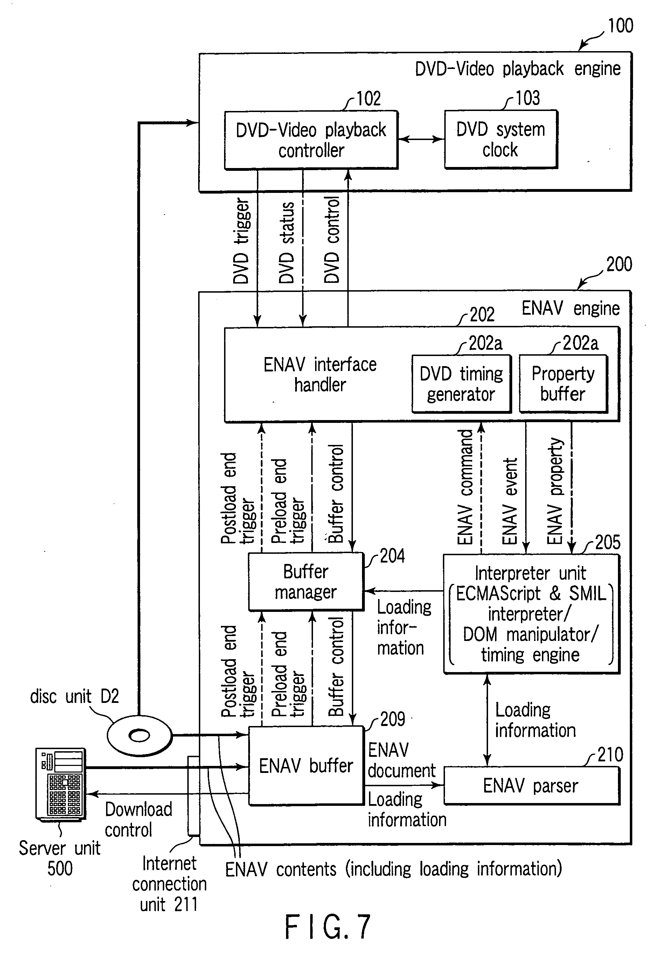

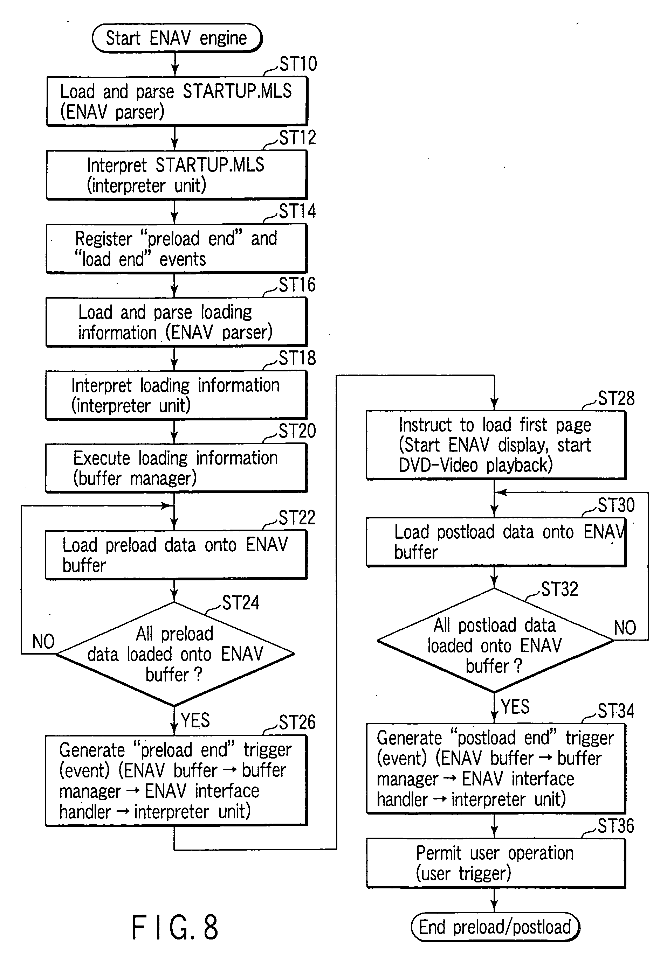

FIG. 7 shows buffer manager 204 and its peripheral arrangement, which are extracted from FIG. 3. FIG. 8 shows the flow of events upon loading data onto ENAV buffer 209. The processing flow in FIG. 8 will be explained below with reference to the arrangement shown in FIG. 7 as needed.

When ENAV engine 200 is started up, it loads startup file (STARTUP.MLS) 40a as one of ENAV contents C21 recorded on ENAV disc D2 inserted in disc unit 300 (step ST10). ENAV parser 210 parses this startup file 40a (step ST10). Parsed startup file 40a is interpreted by interpreter unit 205 (step ST12). Interpreter unit 205 registers an operation upon generation of a "preload end" event (trigger) (e.g., start loading/execution of an initial file such as INDEX.HTM as the first page) and/or an operation upon generation of a "load end" event (trigger) (e.g., permit execution of user operation which has been inhibited so far) in accordance with the description of startup file 40a (step ST14). Furthermore, loading information 40b is loaded (step ST16).

This loading information may be described in startup file 40a, may be recorded as one or more files on disc D2, or may be recorded as one or more files on server 500. When loading information is recorded as one or more files on disc D2 or server 500, startup file 40a describes its recording location and file name. The loading information is loaded by ENAV engine 200 according to this description, and is parsed by ENAV parser 210 (step ST16). The parsed loading information is interpreted by interpreter unit 205 (step ST18). After that, buffer manager 204 executes loading of ENAV contents onto ENAV buffer 209 (step ST20).

The loading information describes the file name and location (place where a file is located) of a file to be downloaded, the file size of the file to be downloaded, the contents type and MIME type of the file to be downloaded (the type of data), and the load type (data to be preloaded or postloaded) for each file to be downloaded.

Buffer manager 204 loads (i.e., preloads) files which must be stored in ENAV buffer 209 before execution of ENAV contents with the load type = "preload", i.e., before start of display of ENAV contents/start of playback of DVD-Video contents in accordance with the description of this loading information (step ST22). At this time, files to be loaded are loaded from disc D2 or server unit 500 in accordance with the order described in the loading information. For example, as "preload" ENAV contents, those (aforementioned INDEX.HTM file and its associated files) which form the first page are designated by the loading information.

After all ENAV contents with the load type = "preload" are stored in ENAV buffer 209 (YES in step ST24), ENAV buffer 209 sends a "preload end trigger" signal to buffer manager 204. Upon reception of the "preload end trigger" signal from ENAV buffer 209, buffer manager 204 sends a "preload end trigger" signal to ENAV interface handler 202. Upon reception of the "preload end trigger" signal from buffer manager 204, ENAV interface handler 202 sends a "preload end event" signal to interpreter unit 205 as an ENAV event.

Interpreter unit 205 is registered with the operation to be executed upon generation of the "preload end event", as described above, and executes the registered operation. For example, as the operation, execution of loading of INDEX.HTM which forms the first page and has already been loaded onto ENAV buffer 209 is registered. Also, INDEX.HTM designates, e.g., start of playback of DVD-Video contents C1. In this manner, upon completion of preloading of ENAV contents (generation of the "preload end event") (step ST26), display of ENAV contents/playback of DVD-Video contents starts (step ST28).

In order to quicken this playback start time, only ENAV contents which form the first page may be designated as "preload" ENAV contents. However, in this case, since no ENAV contents other than those for the first page are stored in the ENAV buffer at the beginning of playback, user operations such as fastforwarding, skip, time search, and the like must be inhibited (otherwise, the playback state may break down since synchronous playback between the DVD-Video contents and ENAV contents is disabled).

While display of ENAV contents and playback of DVD-Video contents are made, buffer manager 204 subsequently loads files to be stored in the ENAV buffer after the beginning of execution of ENAV contents with the load type = "postload", i.e., after start of display of ENAV contents/start of playback of DVD-Video contents in accordance with the description of the loading information (step ST30). At this time, files to be loaded are loaded from server unit 500 in accordance with the order described in the loading information. In this case, "postload" ENAV contents may be described in the loading information in descending order of priority. For example, when the first page is described as "preload" ENAV contents, the next page is described as the first "postload" ENAV contents.

After all ENAV contents with the load type = "postload" are stored in the ENAV buffer (YES in step ST32), ENAV buffer 209 sends a "postload end trigger" signal to buffer manager 204 (step ST34). Upon reception of the "postload end trigger" signal from ENAV buffer 209, buffer manager 204 sends a "postload end trigger" signal to ENAV interface handler 202.
Upon reception of the "postload end trigger" signal from buffer manager 204, ENAV interface handler 202 sends a "postload end event" signal to interpreter unit 205 as an ENAV event.

Interpreter unit 205 is registered with the operation to be executed upon generation of the "postload end event", as described above, and executes the registered operation. For example, when the aforementioned user operations such as fastforwarding, skip, time search, and the like are inhibited (until postload end), the operation for permitting the inhibited user operations (after postload end) is registered. That is, since all ENAV contents are stored in the ENAV buffer, the user operations need not be restricted (after postload end). For this reason, after the "postload end trigger" signal is generated, the inhibited state of user operations is canceled (step ST36).

Note that inhibition of user operations and cancellation of the inhibited state (to permit user operations) can be attained by switching information bits of user operation control (UOP) specified by the existing DVD-Video standard. Alternatively, a user operation inhibition/permission process may be programmed in firmware associated with user operations in the player of FIG. 3, and the process in step ST36 may be executed by a method unique to the player.

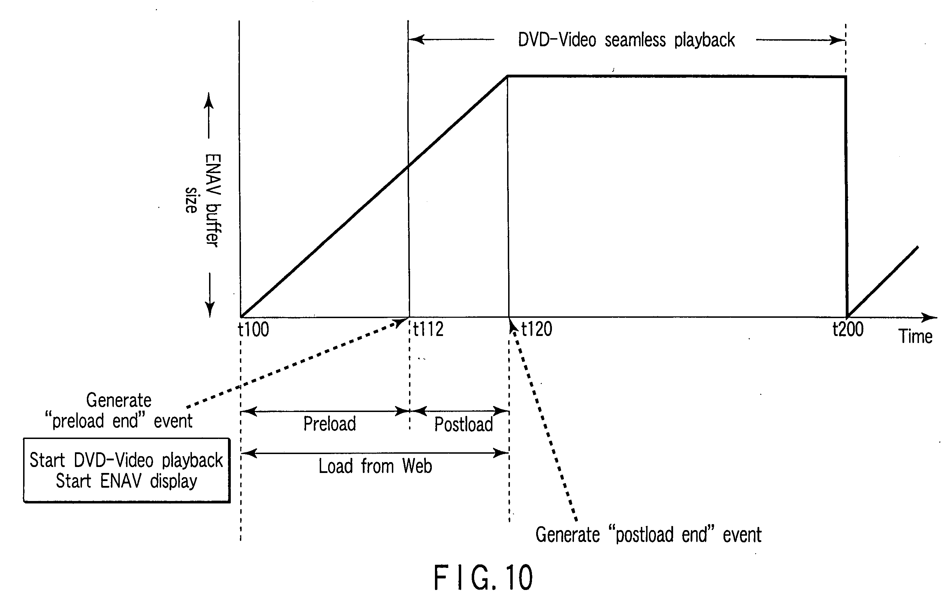

The process in FIG. 8 may be interpreted to mean the following playback method from a given standpoint. That is, startup information (STARTUP.MLS) is loaded (ST10); data to be preloaded (preload data in ST24) are loaded onto a buffer (ENAV buffer 209) on the basis of loading information which is contained in the loaded startup information or is referred to by the startup information (ST12 to ST24); and, after that (after completion of the process of FIG. 8), display and/or playback of the data loaded onto the buffer (preload data in ST24) and video contents and/or audio contents from a disc (D2) are/is started (ST28; see after t112 in FIGS. 10, 11, and 13).

Alternatively, the process in FIG. 8 may be interpreted to mean the following playback method from another standpoint. That is, startup information (STARTUP.MLS) is loaded (ST10); and data used in playback (preload data in ST24 and postload data in ST32), which include data to be preloaded (preload data) and other data (postload data), are loaded onto a buffer (ENAV buffer 209) on the basis of loading information which is contained in the loaded startup information or is referred to by the startup information (ST12 to ST32). Then, display and/or playback of the preloaded data (preload data in ST24) loaded onto the buffer, and video contents and/or audio contents from a disc (D2) are/is started after completion of loading of the data to be preloaded (preload data) onto the buffer (ST28; see after t112 in FIGS. 10, 11, and 13). After the beginning this display and/or playback, other data (postload data) are loaded onto the buffer (ENAV buffer 209) parallel to the display and/or playback (ST30 to ST32; see t112 to t120 in FIGS. 10, 11, and 13).

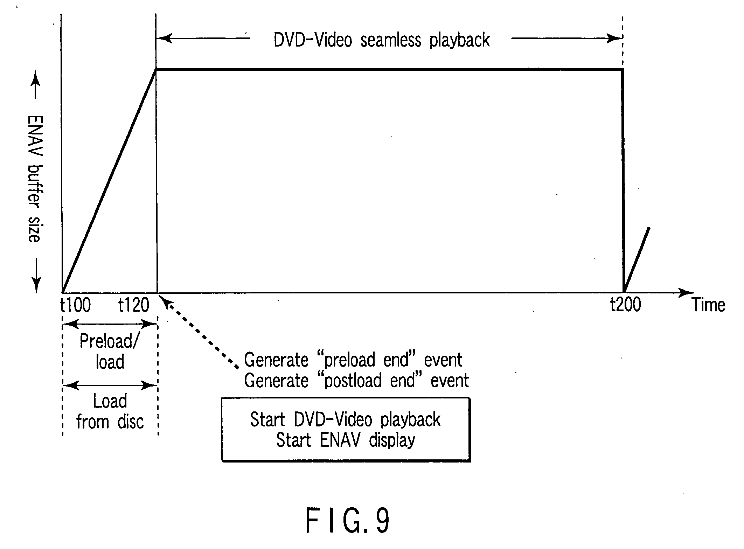

FIG. 9 shows an example of a timing chart when all ENAV contents are recorded on disc D2.

The loading rate of ENAV contents C21 from disc D2 is overwhelmingly higher than the download rate of ENAV contents C22 from server 500. For example, when ENAV contents having a size of 32MB are to be loaded at a rate of 20 Mbps, it takes 12.8 seconds. When all ENAV contents are recorded on disc D2, it is desirable to preload all contents since it is difficult to load ENAV contents from disc D2 once playback of DVD-Video contents starts, and the loading rate of ENAV contents from disc D2 is high. In this case, in the loading information, the load type of all ENAV contents is set to "preload", and no ENAV contents set with "postload" are present.

Buffer manager 204 loads ENAV contents from disc D2 onto ENAV buffer 209 in accordance with the loading information (t100 to t120 in FIG. 9). After all "preload" ENAV contents are stored in the ENAV buffer, a "preload end" event is generated (t120). In response to this event, display of ENAV contents/playback of DVD-Video contents starts. In this example, since there are no ENAV contents set with "postload", a "postload end" event is generated at the same time.

FIG. 10 shows an example of a timing chart when all ENAV contents are recorded on server 500.

The download rate of ENAV contents from server 500 is overwhelmingly lower than the loading rate of ENAV contents from disc D2. For example, when ENAV contents having a size of 32MB are to be downloaded at a rate of 128 kbps, it takes as long as about 34 minutes. That is, when all ENAV contents on server 500 are loaded onto ENAV buffer 209 and playback of DVD-Video contents/display of ENAV contents then starts, the user must wait for a long period of time. Hence, in the loading information, the load type of some of all ENAV contents is set to "preload", and that of the remaining ENAV contents is set to "postload". In this case, ENAV contents set with "preload" may be only those for, e.g., the first page.

Buffer manager 204 loads ENAV contents from server 500 onto ENAV buffer 209 in accordance with the loading information (t100 to t120 in FIG. 10). After all "preload" contents are stored in ENAV buffer 209, a "preload end" event is generated (t112). In response to this event, display of ENAV contents/playback of DVD-Video contents starts. Meanwhile, buffer manager 204 continues to load the remaining "postload" ENAV contents onto the ENAV buffer (t112 to t120). After all "postload" ENAV contents are stored in the ENAV buffer, a "postload end" event is generated (t120). In response to this event, user operations inhibited so far are permitted.

In this manner, playback of DVD-Video contents and display of ENAV contents can be attained while minimizing the wait time of the user.

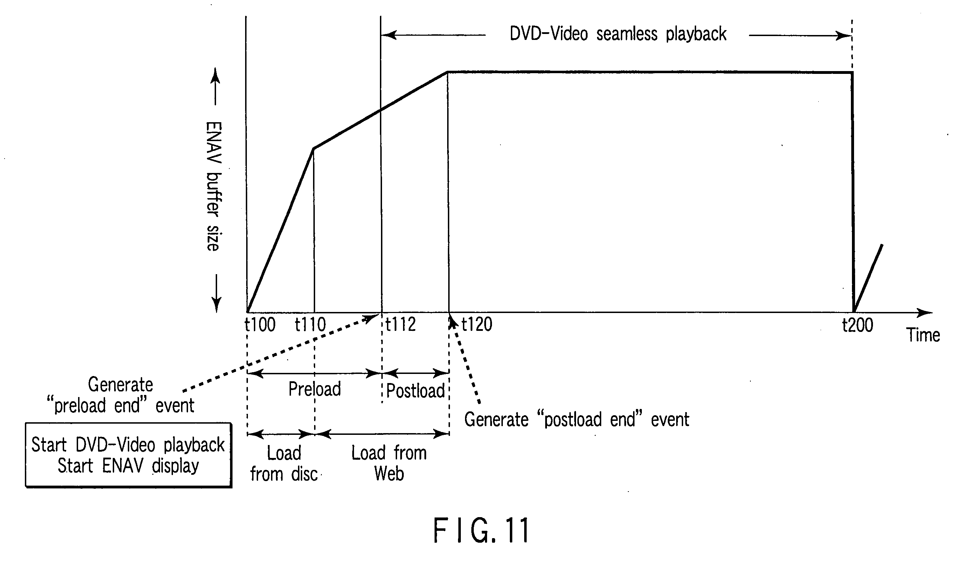

FIG. 11 shows an example of a timing chart when ENAV contents are recorded on both disc D2 and server 500.

As described above, since the download rate from server 500 is lower than the loading rate from disc D2, and it is difficult to load ENAV contents from disc D2 once playback of DVD-Video contents starts, the load type of all ENAV contents on disc D2 and some ENAV contents on server 500 is set to "preload", and the load type of the remaining ENAV contents on server 500 is set to "postload" in the loading information. In this case, the ENAV contents set with "preload" on server 500 may be those for, e.g., the first page.

Buffer manager 204 loads ENAV contents from disc D2 onto ENAV buffer 209 in accordance with the loading information (t110 to t120 in FIG. 11). In this example, after ENAV contents on disc D2 are loaded onto ENAV buffer 209 (t100 to t110), "preload" ENAV contents on server 500 are loaded onto ENAV buffer 209 (t110 to t112) . After all "preload" ENAV contents are stored in ENAV buffer 209, a "preload end" event is generated (t112). In response to this event, display of ENAV contents/playback of DVD-Video contents starts. Meanwhile, buffer manager 204 continues to load the remaining "postload" ENAV contents on server 500 onto the ENAV buffer (t112 to t120). After all "postload" ENAV contents are stored in the ENAV buffer, a "postload end" event is generated (t120). In response to this event, user operations inhibited so far are permitted.

In the example of FIG. 11, the processes from t100 to t112 are executed as foreground processes, but those from t112 to t120 can be executed as background processes. That is, after minimum required data are preloaded onto ENAV buffer 209, DVD-Video playback starts, and the remaining preload data and/or postload data can be loaded onto ENAV buffer 209 during playback. With this configuration, playback of DVD-Video contents and display of ENAV contents can be attained while minimizing the wait time of the user.

In the aforementioned example, two load types, i.e., "preload" and "postload" are used. Also, a plurality of load types such as "preload", "unit 1", "unit 2",... can be set. That is, the "load" load type can be set in detail like "unit 1", "unit 2",....

FIG. 12 shows an example of loading information when the load type is set in detail like "unit 1", "unit 2",.... The loading information includes a file name & location field, file size field, contents type field, download type field, and the like. The file name & location field describes the URL address and file name of a file when that file is present on server unit 500, or describes the directory on a disc and file name of a file when that file is present on disc D2. The file size field describes the file size of a file (unit: bytes). The contents type field describes the type of contents using MIME types. The load type field describes the load timing ("preload", "unit 1", "unit 2",...).

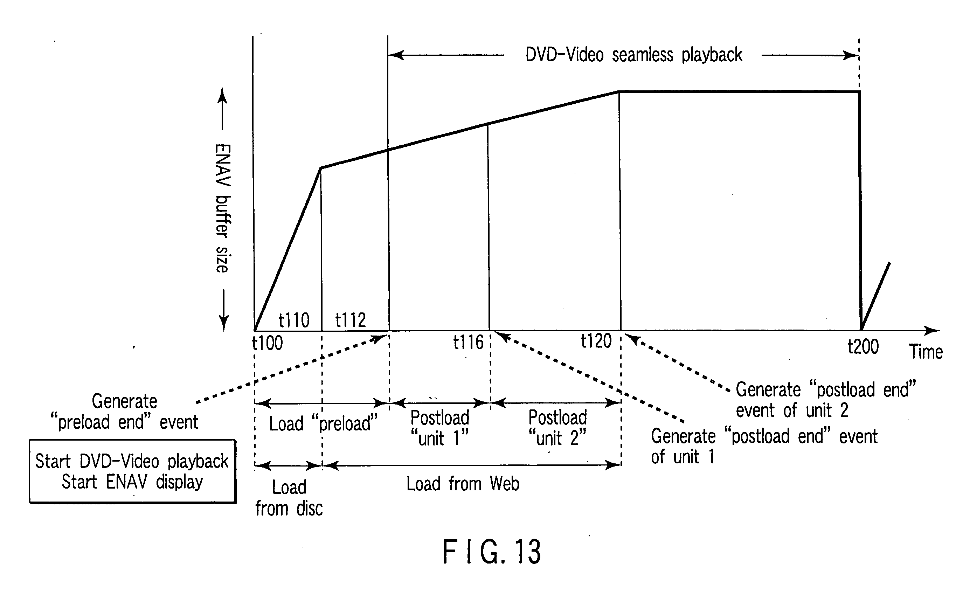

FIG. 13 shows an example of a timing chart when ENAV contents are recorded on both disc D2 and server 500 in accordance with the loading information of FIG. 12.

In this example, the loading information describes that the load type of all ENAV contents on disc D2 and some ENAV contents on server 500 is "preload", the load type of ENAV contents with the next highest priority is "unit 1", and the load type of ENAV contents with low priority is "unit 2".

For example, ENAV contents which form the first page may be assigned to "preload", those which form the second page to "unit 1", and those which form the third page to "unit 2".

Buffer manager 204 loads ENAV contents from disc D2 onto ENAV buffer 209 in accordance with the loading information. In this example, after ENAV contents on disc D2 are loaded onto ENAV buffer 209, "preload" ENAV contents on server 500 are loaded onto ENAV buffer 209 (t100 to t120 in FIG. 13). After all "preload" ENAV contents are stored in the ENAV buffer, ENAV buffer 209 generates a "preload end" event (t112). In response to this event, display of ENAV contents/playback of DVD-Video contents starts (from t112). For example, when the "preload end" event is generated, playback of ENAV contents which are registered as "preload" and form the first page starts. At this time, since loading of ENAV contents which form the second and subsequent pages onto the ENAV buffer is not complete yet, user operations such as fastforwarding, skip, time search, and the like are inhibited (using aforementioned user operation control information UOP and the like). Meanwhile, buffer manager 204 continues to load "unit 1" ENAV contents from server 500 onto ENAV buffer 209 (t112 to t120).

After all "unit 1" ENAV contents are stored in ENAV buffer 209, ENAV buffer 209 generates a "postload end" event of unit 1 (t116). For example, when ENAV contents which form the second page are registered as "unit 1", user operations such as fastforwarding, skip, time search, and the like to the second page of those which are inhibited so far are permitted. Meanwhile, buffer manager 204 continues to load "unit 2" ENAV contents from server 500 onto ENAV buffer 209.

After all "unit 2" ENAV contents are stored in ENAV buffer 209, ENAV buffer 209 generates a "postload end" event of unit 2 (t120). In this example, since the "postload end" event of unit 2 indicates that all ENAV contents are stored in the ENAV buffer, execution of all user operations inhibited so far is permitted.

In this manner, playback of DVD-Video contents and display of ENAV contents can be attained while minimizing the wait time of the user.

FIG. 14 is a view for explaining an example of the operation of partial update area 2092 in ENAV buffer 209. The contents of partial update area 2092 are transferred to, e.g., media decoder 208b in FIG. 3, and are used in playback.

Partial update area 2092 is used to store update audio data UAD, and comprises a ring buffer. The size of this area can be defined in startup information (STARTUP.MLS) 40a or in loading information 40b in FIG. 2.

Update audio data UAD is audio data, which is made up of a plurality of segmented files like Initial data UAD0, Update data1 UAD1, Update data2 UAD2, Update data3 UAD3, Update data4 UAD4,.... These segmented files (UAD0 to UAD4,...) have a size smaller than that of partial update area 2092. This update audio data UAD can be used as audio commentary (audible comments by a director, cast, and the like) and the like to be played back in synchronism with DVD-Video contents.

Initial data UAD0 must be stored in partial update area 2092 before a playback request of update audio data UAD is generated. For example, when Initial data UAD0 is registered as "preload" in the loading information, it can be stored in ENAV buffer 209 before the beginning of playback.

Upon generation of a playback request of update audio data UAD, audio manager 215 plays back Initial data UAD0 already stored in partial update area 2092. At the same time, audio manager 215 loads Update data1 UAD1 as data that follows Initial data UAD0 onto partial update area 2092.

Upon completion of loading of Update data1 UAD1 onto partial update area 2092, audio manager 215 loads next Update data2 UAD2. At the same time, upon completion of playback of Initial data UAD0, audio manager 215 plays back next Update data1 UAD1.

When partial update area 2092 has no free space, or the remaining space is not large enough to load the next file, the oldest data that has been already played back is erased. In this example, upon completion of loading Update data3 UAD3 onto partial update area 2092, since the remaining space is not large enough to load next Update data4 UAD4, Initial data UAD0 which has already been played back is erased, and Update data4 UAD4 is then loaded. At this time, since partial update area 2092 comprises a ring buffer, Update data4 UAD4 can be stored after Update data3 UAD3.

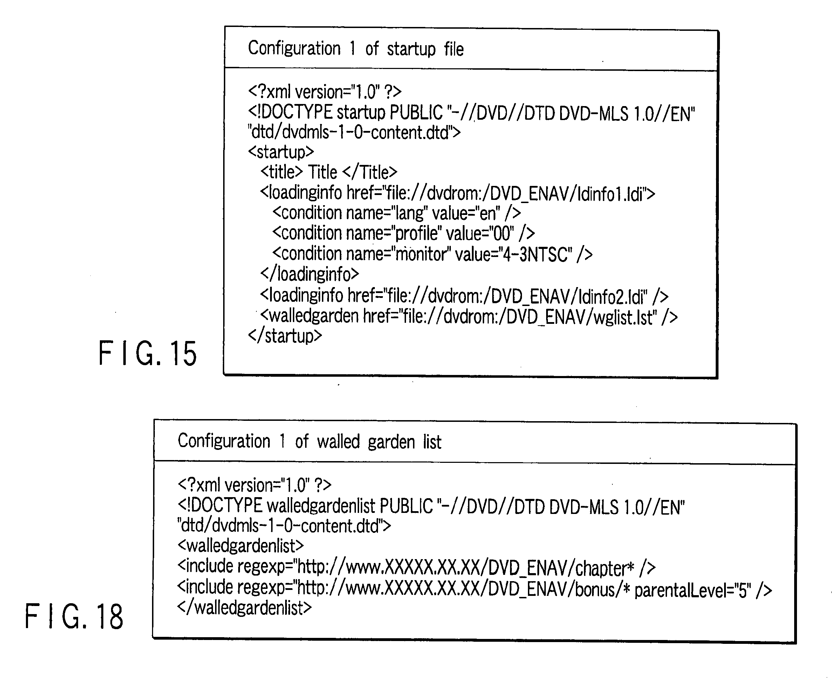

FIG. 15 shows an example of startup information 40a which is described by XML. In this example, startup information 40a describes two pieces of loading information ("file://dvdrom:/DVD_ENAV/ldinfo1.ldi", "file://dvdrom:/DVD_ENAV/ldinfo2.ldi") and one walled garden list ("file://dvdrom:/DVD_ENAV/wglist.lst").

When there are a plurality of pieces of loading information 40b as in this example, the location/file name where each loading information is located can be described using a "loadinginfo" tag, and a condition upon loading that loading information can be described using a "condition" tag.

In this example, when the value of "lang" is "en", i.e., the language setup of a player is English, the value of "profile" is "00", i.e., the profile of that player is "00", and the value of "monitor" is 4-3NTSC", i.e., an output to a video output device (monitor) connected to that ENAV player is an NTSC output with an aspect ratio "4 : 3", the ENAV player loads "ldinfol.ldi" as loading information 40b. Otherwise, the ENAV player loads "ldinfo2.ldi" as loading information 40b.

On the other hand, walled garden list 40c can describe the location of the walled garden list using a "walledgarden" tag.

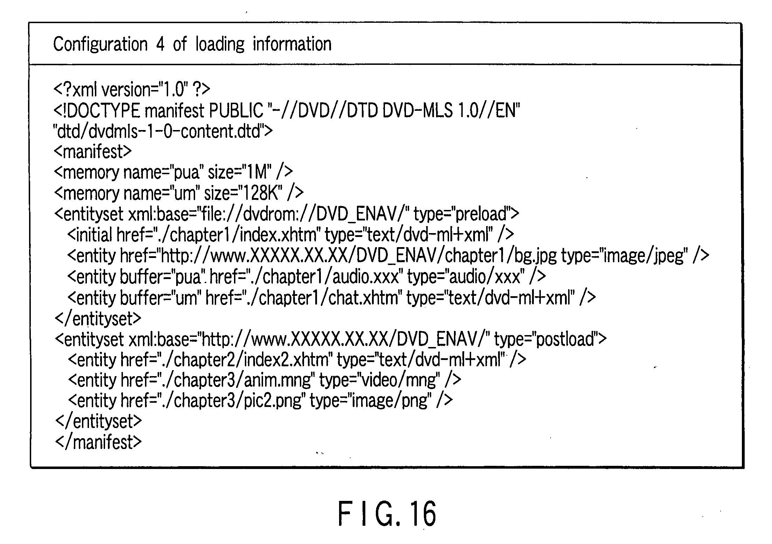

FIG. 16 shows still another example of loading information.

### <Embodiment (1) of loading information>

Loading information 40b can be made up of one or more files. The ENAV player can load one loading information file at a time according to the description of STARTUP.MLS or another Markup file.

Loading information 40b describes the location information/file name and MIME type of each preload file, and the location information/file name and MIME type of each postload file together with an assignment method of the ENAV buffer.

FIG. 16 exemplifies loading information 40b above described by XML. In this example, loading information 40b describes four preload files and three postload files together with the assignment method of the ENAV buffer.

In this example, the preload files are designated using an "entityset" tag with a type attribute = "preload". Also, the locations/file names and MIME types of respective preload files are described using "entity" tags.

When the description of the locations of preload files can be shared by respective files, that location can be described using a base attribute. This "description of a shared file using a base attribute" can abbreviate the description of the locations of files to be described in practice. More specifically, in this embodiment, by designating xml:base="file://dvdrom:/DVD_ENAV/", "file://dvdrom:/DVD ENAV/chapterl/audio.xxx" which should be described normally can be abbreviated as ".chapter1/audio.xxx".

### <Embodiment (2) of loading information>

In the preload files, only one set of the location/file name and MIME type of a file used to execute playback (display) first can be designated using an "initial" tag (note that this file is limited to a Markup file such as XHTML). In this way, when all preload files are loaded into the ENAV buffer, a file to be executed first can be designated.

Note that "initial href" using an "initial" tag in the description of FIG. 16 corresponds to the instruction contents in step ST28 in the flow chart of FIG. 8.

The postload files are also designated using an "entityset" tag with a type attribute = "postload", and the locations/file names and MIME types of respective preload files are described using "entity" tags, as in the preload files.

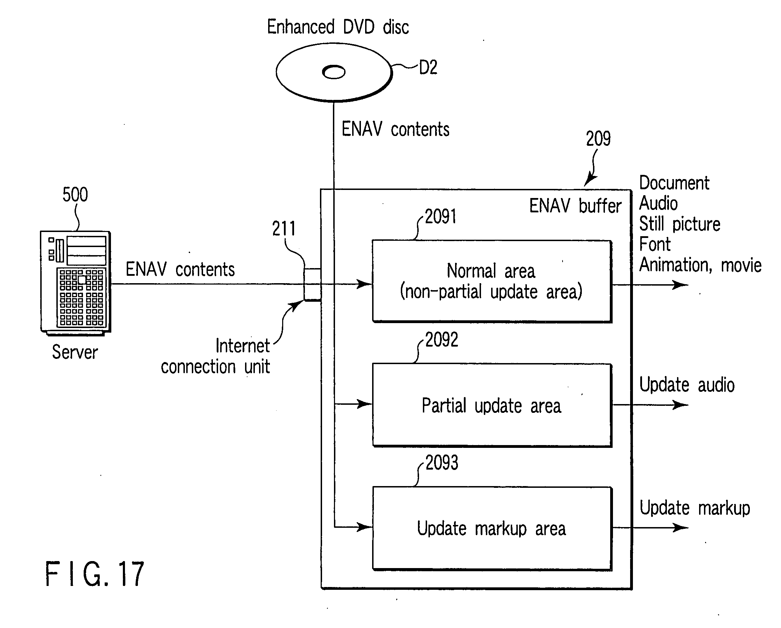

The ENAV buffer (e.g., 209 in FIG. 17 to be described later) can be assigned as follows. That is, the buffer size of a normal area can be designated using a "memory" tag with a name attribute = "normal", that of a partial update area can be designated using a "memory" tag with a name attribute = "pua", and that of an update markup area (2093 in FIG. 17 to be described later) can be designated using a "memory" tag with a name attribute = "um".

FIG. 17 is a block diagram for explaining another example (an ENAV buffer different from that in FIG. 4) of the internal arrangement of ENAV buffer 209 in the apparatus shown in FIG. 3. The arrangement shown in FIG. 17 is obtained by adding update markup area 2093 to that shown in FIG. 4.

### <Embodiment (3) of loading information>

ENAV buffer 209 in FIG. 17 comprises normal area (non-partial update area) 2091, partial update area 2092, and update markup area 2093. Normal area 2091 is an area for which neither loading nor erasure of ENAV contents are made during seamless playback of DVD-Video contents once the ENAV contents are loaded. In other words, in this area, playback of DVD-Video contents is interrupted upon loading new ENAV contents, and the new ENAV contents are loaded after the contents of the normal area are erased.

On the other hand, partial update area 2092 is an area for which ENAV contents are loaded and erased as needed even during playback of DVD-Video contents, and is used to store update audio data (audio commentary data) UAD shown in, e.g., FIG. 14.

Update markup area 2093 which is newly assured in the arrangement of FIG. 17 can store one or more files on designated server 500, but is used not to merely store files. That is, when a file on that server has been updated, the file stored in area 2093 can also be similarly updated. This area is effective for chat (conversation) using an HTML/XHTML file. By assuring such update markup area 2093, server 500 sequentially reflects messages sent from users involved in chat on the file on the server, and the users can acquire the update file as if they have a talk with each other.

Once the size of update mark area 2093 is defined in a loading information file 40b, it is fixed if another loading information file is not loaded. So, the server 500 needs to control the size of the update mark up file (HTML/XHTML fie). That is, in the chat going, the size of markup file is increased and the size may be greater than the size of update markup area 2093. At this time, the server 500 needs to eliminate the file to accommodate to the fixed size of update markup area 2093.

Note that normal area 2091 is used to store documents (Markup/Script/Loading information, etc), still picture data, animation·movie data, audio data, font data, and the like. Partial update area 2092 comprises, e.g., a ring buffer and is configured to be able to play back segmented update audio data while loading them. Update markup area 2093 can be used to store one or more HTML/XHTML file which are to be sequentially updated by the server.

FIG. 18 shows an example of walled garden list 40c contained in ENAV contents C21 shown in FIG. 2.

### <Embodiment (1) of walled garden list>

Walled garden list 40c can be made up of one or more files. The ENAV player (more specifically, firmware which forms ENAV engine 200) can load one walled garden list at a time in accordance with the description of STARTUP.MLS or another Markup file.

A walled garden list file can describe a URI (Uniform Resource Identifier) designated by the contents creator together with a parental level, and the ENAV player can access only that designated URI.

FIG. 18 shows an example of walled garden list 40c described by XML. In this example, the walled garden list describes two URIs. Each URI can be designated using an "include" tag, and a parental level for that URI can be described using a "parentalLevel" attribute.

FIG. 19 is a flow chart for explaining an example of the playback operation of ENAV contents based on walled garden list 40c. This flow chart shows an example of the sequence upon accessing a URI designated by a Markup file with reference to walled garden list 40c.

Upon reception of a playback start instruction of ENAV contents, the ENAV player loads startup information 40a (step ST100), and then loads loading information 40b and walled garden list 40c on the basis of the description of startup information 40a (step ST102). The ENAV player fetches ENAV contents designated by loading information 40b onto ENAV buffer 209, and plays back (executes) an Initial Markup file designated by an "initial" tag in loading information 40b (step ST104).

If the currently executed Markup file (or the user directly) designates the next URI to be accessed (YES in step ST106), the ENAV player checks with reference to already loaded walled garden list 40c whether or not the designated URI is contained in this list 40c (step ST108). If the designated URI is not contained in the list (NO in step ST108), i.e., the contents creator does not permit access to that URI, the ENAV player displays a message "access is not permitted" or the like to the user (step ST110), and prompts the user to designate another operation (e.g., access to another URI). The flow then returns to step ST106.

On the other hand, if the designated URI is contained in the list (YES in step ST108), and if walled garden list 40c does not designate any parental level together with that URI (NO in step ST112), access to the designated URI is permitted (step ST130).

If walled garden list 40c designates a parental level together with that URI (YES in step ST112), it indicates that this URI has "a limitation using the parental level by the contents creator". In such case, the parental level designated by walled garden list 40c is compared with that (a value set in system parameter SPRM(13)) set in the ENAV player (by the user) (step ST114).

Only when the parental level designated by walled garden list 40c is equal to or lower than that (SPRM(13)) set in the ENAV player (YES in step ST116), or the value (SPRM(13)) of the parental level set in the ENAV player is equal to or larger than that of a parental level at the access destination (YES in step ST116), access to the designated URI is permitted (when the parental level designated by walled garden list 40c is equal to that set in the ENAV player, access is permitted).

On the other hand, if the value (SPRM(13)) of the parental level set in the ENAV player is smaller than that of the parental level at the access destination (NO in step ST116), the ENAV player prompts the user to, e.g., change the parental level value set in that player (step ST118). As a result, if the changed parental level value is equal to or larger than that of contents (YES in step ST120; YES in step ST116), access to the designated URI is permitted. However, if the changed parental level value is still smaller than that of contents (NO in step ST120), the ENAV player displays a message "access is not permitted" or the like (step ST110), and prompts the user to designate another operation.

Note that "system parameter SPRM(13)" described above is the same as a system parameter used by a "navigation command (SetTmpPRL) used to temporarily set a parental level" specified by the existing DVD-Video (ROM) standard. However, another parameter memory may be prepared, and the parental level value used in "walled garden list" may be set in this parameter memory.

On the other hand, a walled garden is used to limit the range of accessible Web contents (or services), and different ranges can be set for respective discs. Walled garden list 40c is a list that describes such walled garden, i.e., a list of all URIs for accessible Web services.

By referring to the list that describes the walled garden, the following process can be achieved. That is, when the user of the apparatus shown in FIG. 3 (ENAV player that plays back disc D2) wants to access Web contents via a communication line (Internet), he or she can access Web contents only within the range permitted by the description of walled garden list 40c in that disc D2 (the provider of disc D2 can inhibit the user from making Web access beyond the description range of walled garden list 40c as long as the user uses that disc).

The process in the flow chart in FIG. 8 and/or FIG. 19 can be implemented as firmware of a microcomputer (MPU: not shown) which forms ENAV engine 200 in FIG. 3.

Note that the present invention is not limited to the aforementioned embodiment, and various modifications may be made without departing from the scope of the invention when it is practiced. For example, the present invention can be used not only in DVD-Video discs but also in DVD audio discs.

The respective embodiments may be combined as needed as long as possible, and combined effects can be obtained in such case. Furthermore, the embodiments include inventions of various stages, and various inventions can be extracted by appropriately combining a plurality of disclosed required constituent elements. For example, even when some required constituent elements are omitted from all required constituent elements described in the embodiment, an arrangement from which the required constituent elements are omitted can be extracted as an invention as long as the problems that have been discussed in the paragraphs of the problems to be solved by the invention, and the effects that have been explained in the paragraphs of the effect of the invention can be obtained.

According to the present invention, disc playback expandability and download efficiency of Web information and the like can be improved (resulting in a shorter wait time of the user).

## Claims

1. An information storage medium (D2) having a first area (3) for storing video contents and/or audio contents, and a second area (4) for storing expansion information,
**CHARACTERIZED IN THAT** the expansion information (ENAV contents) is configured to include preload information (e.g., "preload" in FIG. 5) used to preload any information from the second area and/or an area other than the second area.

2. A medium according to claim 1, **CHARACTERIZED IN THAT** the expansion information includes startup information (40a in FIG. 2) configured to directly or indirectly describe loading information, and
THAT the loading information is configured to include the preload information.

3. An information playback method for playing back the information storage medium of claim 2, **CHARACTERIZED BY** comprising:
loading (ST10 in FIG. 8) the startup information (STARTUP.MLS);
loading (ST12-ST26 in FIG. 8) data to be preloaded onto a buffer based on the loading information contained in the loaded startup information; and
starting (ST28 in FIG. 8) display and/or playback of the data loaded onto the buffer and the video contents and/or the audio contents from the first area after loading.

4. An information playback method for playing back the information storage medium of claim 2, **CHARACTERIZED BY** comprising:
loading (ST10 in FIG. 8) the startup information (STARTUP.MLS);
loading (ST12-ST26 in FIG. 8) data to be used in playback which include data to be preloaded and other data onto a buffer based on the loading information contained in the loaded startup information; and
starting (ST28 in FIG. 8) display and/or playback of the preloaded data loaded onto the buffer, and the video contents and/or the audio contents from the first area after loading of the data to be preloaded onto the buffer is complete, and
loading (ST30-ST32 in FIG. 8) the other data onto the buffer parallel to the display and/or playback after the display and/or playback has started.

5. An information playback apparatus for playing back an information storage medium which has a first area that stores video contents and/or audio contents, and a second area that stores expansion information, **CHARACTERIZED BY** comprising:
first acquisition means (100 in FIG. 7) for acquiring the video contents and/or the audio contents from the information storage medium;
second acquisition means (200, 211 in FIG. 7) for acquiring the expansion information from the information storage medium or externally acquiring another expansion information via a communication line; and
means (204 in FIG. 7) for generating timing information indicating completion of acquisition of the expansion information.

6. An apparatus according to claim 5, **CHARACTERIZED IN THAT** the expansion information contains loading information (FIGS. 5, 6), and the timing information (trigger/event in ST26 or ST34 of FIG. 8) is generated based on the loading information.

7. An apparatus according to claim 5, **CHARACTERIZED IN THAT** display of the expansion information starts or playback of contents from the information storage medium starts (start of display/playback in ST28 of FIG. 8) in response to generation of the timing information (trigger/event in ST26 of FIG. 8).

8. An apparatus according to claim 5, **CHARACTERIZED IN THAT** user operations which are inhibited so far are permitted (ST36 of FIG. 8) in response to generation of the timing information (trigger/event in ST34 of FIG. 8) if such user operations are detected.

9. A method for recording the expansion information on the medium as defined in claim 2.

10. A method for reproducing the expansion information from the medium as defined in claim 2.

11. A medium according to claim 2, **CHARACTERIZED IN THAT** said expansion information further includes access limitation information, or a walled garden list (40c), for defining a user-accessible range.

12. An apparatus (FIG. 3) for playing back video and/or audio contents from the information storage medium as defined in claim 11, **CHARACTERIZED BY** comprising:
a first acquisition unit (100) configured to obtain the video and/or audio contents from the information storage medium;
a second acquisition unit (200, 211) configured to obtain the expansion information from the information storage medium, or to obtain other expansion information from an exterior via a communication line;
a generation unit (204) configured to generate timing information (preload/postload end trigger) indicating that obtaining of the expansion information is completed; and
an execution unit (firmware of an MPU or CPU constituting the ENAV engine in FIG. 3) configured to externally access (ST108 yes, ST130 in FIG. 19), via said communication line, only the user-accessible range defined by said access limitation information which is included by the obtained expansion information.
